# EUROPÄISCHE PATENTANMELDUNG

(11) **EP 1 106 447 A2**
(43) Veröffentlichungstag der Anmeldung: **13.06.2001**
(21) Anmeldenummer: 00125316.0
(22) Anmeldetag: 29.11.2000
(51) Int. Cl.: B60R 21/26

(54) **Fahrzeuginsassen-Rückhaltesystem**

(30) Priorität: 10.12.1999 DE 29921743 U
(71) Anmelder: TRW Occupant Restraint Systems GmbH & Co. KG, 73553 Alfdorf (DE)
(72) Erfinder: Fischer, Anton, 73579 Leinweiler (DE)
(74) Vertreter: Kitzhofer, Thomas, Dipl.-Ing.

(57) **Zusammenfassung**

Die Erfindung betrifft ein Fahrzeuginsassen-Rückhaltesystem mit einer Gaszuführeinrichtung (22), die ein Außengehäusc (28) mit wenigstens zwei Ausströmöffnungen (20, 20') hat, und wenigstens zwei aufblasbaren Elementen (12, 14), denen unterschiedliche Ausströmöffnungen (20, 20') zugeordnet sind und die über die zugeordneten Ausströmöffnungen (20, 20') parallel befüllt werden. Das Fahrzeuginsassen-Rückhaltesystem ist dadurch gekennzeichnet, daß die Ausströmöffnungen (20, 20') so gestaltet sind, daß während des Aufblasens der Elemente die Gasdurchflüsse durch die einzelnen Ausströmöffnungen (20, 20') zu den aufblasbaren Elementen (12, 14) unterschiedlich sind.

## Beschreibung

Die Erfindung betrifft ein Fahrzeuginsassen-Rückhaltesystem mit einer Gaszuführeinrichtung, die ein Außengehäuse mit wenigstens zwei Ausströmöffnungen hat, und wenigstens zwei aufblasbaren Elementen, denen unterschiedliche Ausströmöffnungen zugeordnet sind und die über die zugeordneten Ausströmöffnungen parallel befüllt werden.

Es ist bekannt, einen aus mehreren Kammern bestehenden Gassack eines Seitenaufprallschutzsystems dadurch zu befüllen, daß von einem Gasgenerator abgegebenes Druckgas parallel in mehrere Kammern des Gassackes einströmt. Eine Schwierigkeit bei einem parallelen Befüllungsverfahren liegt darin, den Innendruck von parallel befüllten Gassäcken einzustellen. Zu diesem Zweck werden verschiedene Gaszuführeinrichtungen mit integrierten Gasgeneratoren mit verschieden hohen Gasausstößen den einzelnen Kammern zugeordnet. Eine weitere Möglichkeit der Zuführung von Druckgas in die einzelnen Kammern des Gassacks besteht darin, ein Gasverteilrohr vorzusehen, das in den Gassack eingeführt wird und das ein axiales Ende hat, an dem der Gasgenerator angeschlossen ist. Es ergeben sich bei dieser Ausgestaltung lange Strömungswege, so daß der Gasgenerator ausreichende Leistung haben muß, um die Kammern gleichzeitig zu befüllen.

Der Erfindung stellt sich die Aufgabe, ein Rückhaltesystem mit einer parallen Befüllung der aufblasbaren Elemente zu schaffen, bei dem die aufblasbaren Elemente besser an ihren Einsatzzweck angepaßt werden können. Dies wird dadurch erreicht, daß die Ausströmöffnungen der Gaszuführeinrichtung so gestaltet sind, daß während des Aufblasens der Elemente die Gasdurchflüsse durch die einzelnen Ausströmöffnungen zu den aufblasbaren Elementen unterschiedlich sind. Da der Gasdurchfluß von der Gaszuführeinrichtung in das aufblasbare Element den in jedem Element nach einer bestimmten Zeit herrschenden Innendruck bestimmt, läßt sich auf diese Weise der Innendruck der einzelnen aufblasbaren Elemente gezielt einstellen und auf den jeweiligen Einsatzzweck anpassen. Es werden keine komplizierten Bauteile wie z.B. Ventile benötigt, und die Baugröße des Rückhaltesystems wird nicht erhöht. Auf diese Weise lassen sich auch unterschiedlich große aufblasbare Elemente realisieren, die den gleichen Innendruck aufweisen, obwohl sie vom gleichen Gasgenerator befüllt werden.

Vorteilhafterweise sind die Ausströmöffnungen und die Füllvolumina der Elemente so aufeinander abgestimmt, daß die Gaszuführeinrichtung unterschiedliche Innendrücke in den einzelnen aufblasbaren Elementen erzeugen kann. Durch die gezielte Steuerung des Innendruckes in den einzelnen aufblasbaren Elementen ist es möglich, mehrere aus aufblasbaren Elementen gebildete Gassäcke, die eine unterschiedliche Funktion erfüllen, gleichzeitig durch einen einzigen Gasgenerator zu befüllen. So können z.B. verschiedene Kammern eines Seitengassackes mit unterschiedlichem Druck versehen werden, um zum einen den Fahrzeuginsassen abzufangen und zum anderen den Gassack zu stabilisieren. Auch können parallel zu einem Seitengassack andere Gassäcke, wie etwa ein A-Säulengassack, ein Schiebedachgassack oder ein Haltegriffgassack, die entweder einen höheren oder einen niedrigeren Innendruck aufweisen sollen als der Seitengassack, gleichzeitig von einem gemeinsamen Gasgenerator befüllt werden.

Auf bevorzugte Weise erfolgt die Steuerung der Gasdurchflüsse dadurch, daß die Ausströmöffnungen unterschiedliche Querschnitte aufweisen. Da der Querschnitt einer Öffnung die Menge des pro Zeiteinheit durchströmenden Gases, also den Gasdurchfluß und damit den nach einer gewissen Zeit erreichten Druck bestimmt, bietet der Querschnitt der Ausströmöffnungen ein einfaches, kostengünstiges und leicht auf den jeweiligen Anwendungszweck umzusetzendes Mittel zur Steuerung des Drucks.

Vorteilhafterweise sind die Ausströmöffnungen so im Außengehäuse der Gaszuführeinrichtung angeordnet, daß unmittelbar stromaufwärts von allen Ausströmöffnungen der gleiche Druck herrscht. Auf diese Weise wird die Reproduzierbarkeit der Gasdurchflüsse durch die jeweiligen Ausströmöffnungen sichergestellt und die Sicherheit der Rückhaltevorrichtung erhöht.

Die Gaszuführeinrichtung enthält vorzugsweise einen Gasgenerator, der in dem Außengehäuse untergebracht ist, wobei zwischen dem Gasgenerator und dem Außengehäuse ein Druckausgleichsraum gebildet ist. Dieser Druckausgleichsraum sorgt dafür, daß auf der stromaufwärtigen Seite jeder Ausströmöffnung der gleiche Druck herrscht.

In einer bevorzugten Ausführungsform der Erfindung bilden die aufblasbaren Elemente und die Gaszuführeinrichtung ein Gassackmodul, das vorteilhafterweise ein längs des Dachrahmens eines Fahrzeugs angeordnetes Seitengassackmodul ist, mit wenigstens einem aufblasbaren Element, das wenigstens eine Seitenscheibe eines Fahrzeugs wenigstens teilweise abdeckt. Gerade in Seitengassäcken mit großer Ausdehnung, die in mehrere Kammern unterteilt sind, kann es wünschenswert sein, daß die einzelnen Kammern unterschiedliche Innendrücke aufweisen. Z.B. kann eine Kammer, die ein relativ kleines Fenster im rückwärtigen Bereich des Fahrzeuges abdeckt, weicher gestaltet sein als eine Kammer, die den Aufprall des Fahrers oder des Beifahrers auffangen und gleichzeitig verhindern muß, daß dieser durch die Öffnung eines relativ großen Seitenfensters geschleudert wird.

In einer bevorzugten Ausführungsform der Erfindung weist die Gaszuführeinrichtung zwei axiale Enden auf, wobei die Ausströmöffnungen an den axialen Enden angeordnet sind und der Gasgenerator hinter einem Fahrzeugfrontsitz und vorderhalb des Sitzes eines Heckinsassen am Dachrahmen angeordnet ist und sich je ein aufblasbares Element von den axialen Enden der Gaszuführeinrichtung nach vorne und nach hinten erstreckt. Auf diese Weise läßt sich das Fahrzeuginsassenrückhaltesystem platzsparend gestalten. Es kann z.B. ein Rohrgasgenerator verwendet werden, so daß die Gaszuführeinrichtung eine schmale, langgestreckte Form annehmen kann. Dadurch, daß die Gaszuführeinrichtung annähernd im Bereich der B-Säule im Dachrahmen angeordnet ist, werden die Strömungswege für das Druckgas kurz gehalten. Die Verbindungen zu den einzelnen aufblasbaren Elementen können sich ebenfalls entlang dieser Längsachse erstrecken, so daß kein zusätzlicher Bauraum benötigt wird.

Vorteilhafterweise sind wenigstens zwei der aufblasbaren Elemente über ein nicht aufblasbares Verbindungsteil miteinander gekoppelt. So kann z.B. eine bekannte Gassackstruktur verwendet werden, bei der zwei Gewebestücke so miteinander vernäht, verwebt oder verklebt sind, daß der gesamte Gassack den Seitenscheibenbereich von der A- bis zur C-Säule abdeckt, wobei Abnäher den Gassack in einzelne, nicht miteinander verbundene Kammern aufteilen, die durch Gewebestücke ohne Strömungsverbindung zum Gasgenerator voneinander getrennt sind.

Eine weitere bevorzugte Ausführungsform der Erfindung sieht vor, daß wenigstens zwei getrennte, aus aufblasbaren Elementen gebildete Gassäcke vorgesehen sind. Dies hat den Vorteil, daß Material eingespart wird, da der Gassack genau an der jeweils benötigten Stelle plaziert werden kann. In einer anderen Ausführungsform ist es möglich, daß z.B. zwei Elemente zu einem Seitengassack zusammengefaßt werden, während ein drittes Element getrennt davon einen eigenständigen Gassack bildet.

Besonders vorteilhaft ist es, wenn sich ein solcher getrennter Gassack längs des vorderen Dachrahmens erstreckt und diesen Teil des Dachrahmens abdeckt, wobei dieser Gassack mit der Gaszuführeinrichtung für die übrigen Kammern in Strömungsverbindung steht. Ein Gassack an dieser Stelle schützt den Kopf eines nach vorne gebeugten Fahrzeuginsassen bei einem seitlichen Aufprall.

Eine weitere Ausführungsform der Erfindung sieht vor, daß der sich längs des vorderen Dachrahmens erstreckende Gassack als langgestreckter Schlauch ausgebildet ist, unter dem im aufgeblasenen Zustand ein die vordere Seitenscheibe wenigstens teilweise abdeckender Gassack angeordnet ist. Eine solche Kombination aus einem Seitengassack und einem A-Säulengassack, der einen Teil des Dachrahmens abdeckt, bietet einen optimalen Schutz für einen Fahrzeuginsassen auf einem der Vordersitze.

Weitere Merkmale und Vorteile der Erfindung ergeben sich aus der nachfolgenden Beschreibung mehrerer Ausführungsbeispiele der Erfindung mit Bezug auf die beigefügten Figuren. In diesen zeigen:
Figur 1a ein erfindungsgemäßes Fahrzeuginsassen-Rückhaltesystem im befüllten Zustand,
Figur 1b eine Gaszuführeinrichtung eines erfindungsgemäßen Fahrzeuginsassen-Rückhaltesystems und,
Figur 2 eine weitere Ausführung eines erfindungsgemäßen Fahrzeuginsassen-Rückhaltesystems, ebenfalls im befüllten Zustand.

Figur la zeigt ein erfindungsgemäßes Fahrzeuginsassen-Rückhaltesystem 10 im Innenraum eines Fahrzeuges. In diesem Ausführungsbeispiel enthält das Rückhaltesystem 10 zwei aufblasbare Elemente 12, 14, die zwei unabhängige Kammern eines Seitengassacks bilden, wobei sich das Element 12 über einen großen Teil der vorderen Seitenscheibe 16 und das Element 14 über einen Teil der hinteren Seitenscheibe 18 erstreckt. Die Elemente 12, 14 sind in den Bereichen angeordnet, in denen bei einem seitlichen Aufprall mit dem Auftreffen des Kopfes eines Fahrzeuginsassen gerechnet werden muß. Diese aufblasbaren Elemente 12, 14 sind über Anschlüsse 30 mit einer Gaszuführeinrichtung 22 verbunden, die im Bereich des Dachrahmens 24 etwa in der Mitte zwischen den beiden aufblasbaren Elementen 12, 14 angeordnet ist.

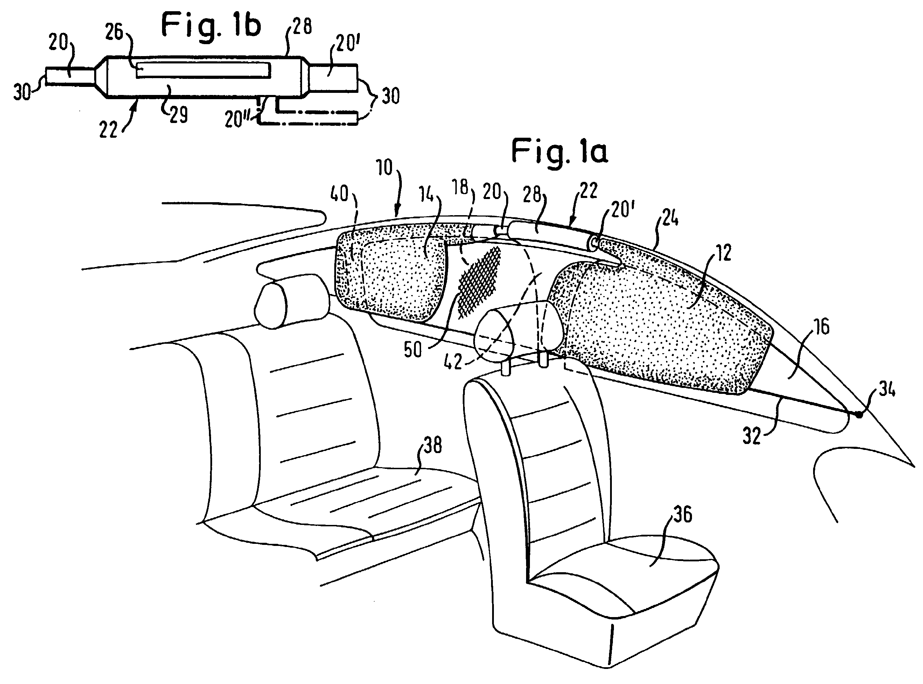

Die Gaszuführeinrichtung 22 ist schematisch in Figur 1b gezeigt. Sie enthält ein Außengehäuse 28, das eine im wesentlichen langgestreckte Form aufweist und an seinen axialen Enden mit Ausströmöffnungen 20, 20' mit unterschiedlichen Querschnitten versehen ist, an die über Anschlüsse 30 die einzelnen aufblasbaren Elemente 12, 14, hier die beiden Kammern des Seitengassacks angeschlossen werden. Im Außengehäuse 28 ist ein Gasgenerator 26 aufgenommen. Die langgestreckte Form der Gaszuführeinrichtung 22 vereinfacht es, sie im Dachrahmen 24 unterzubringen. Als Druckgasquelle wird bevorzugt ein Rohrgasgenerator eingesetzt.

Zwischen dem Gasgenerator 26 und dem Außengehäuse 28 ist ein Druckausgleichsraum 29 gebildet, in den das Druckgas aus dem Gasgenerator 26 einströmt. Dieser Druckausgleichsraum 29 ist so gestaltet, daß beim Ausströmen des Druckgases aus dem Gasgenerator 26 direkt stromaufwärts der Ausströmöffnungen 20, 20' vor jeder Ausströmöffnung der gleiche Druck herrscht.

Die Gaszuführeinrichtung 22 ist in einem Bereich hinter dem Frontsitz 36, aber vor dem Sitz eines Heckinsassen 38, angeordnet. Durch diese Anordnung werden beide Elemente 12, 14 mit sehr kurzen Strömungswegen befüllt, und die aufblasbaren Elemente 12, 14 können sehr materialsparend gearbeitet werden. Lange Gasführungsrohre entfallen. Die aufblasbaren Elemente 12, 14 stützen sich am Dachrahmen 24 sowie an der C-Säule 40 bzw. der B-Säule 42 ab, um ihre Stabilität zu erhöhen.

Die aufblasbaren Elemente 12, 14 sind über ein nicht aufblasbares Gewebestück 50 miteinander verbunden und bilden so einen Gassack mit zwei Kammern. Dieser Gassack ist an seinem unteren Rand über ein Befestigungsband 32 an einem Befestigungspunkt 34 mit dem Dachrahmen 24 verbunden. Das Befestigungsband 32 erhöht die Stabilität des Gassacks.

Im nicht aufgeblasenen Zustand vor dem Auslösen des Fahrzeuginsassen-Rückhaltesystems 10 sind die aufblasbaren Elemente 12, 14 zusammen mit der Gaszuführeinrichtung 22 im Bereich des Dachrahmens 24 oberhalb der B-Säule 42 des Fahrzeuges untergebracht. Bei einem seitlichen Aufprall löst ein Signal eines nicht gezeigten Sensors einen in der Gaszuführeinrichtung 22 angeordneten Gasgenerator 26 oder eine andere Druckgasquelle aus und gibt Druckgas frei, das in den im Außengehäuse 28 der Gaszuführeinrichtung 22 gebildeten Druckausgleichsraum 29 strömt.

Vom Druckausgleichsraum 29 aus verteilt sich das Druckgas über die verschiedenen Ausströmöffnungen 20, 20' durch die Anschlüsse 30 auf die einzelnen aufblasbaren Elemente 12, 14 und befüllt diese. Der Querschnitt der Ausströmöffnungen 20, 20' ist je nach Volumen des zu befüllenden Elementes 12, 14 und nach dessen Einsatzzweck so gewählt, daß jedes Element 12, 14 auf einen geeigneten Innendruck aufgeblasen wird.

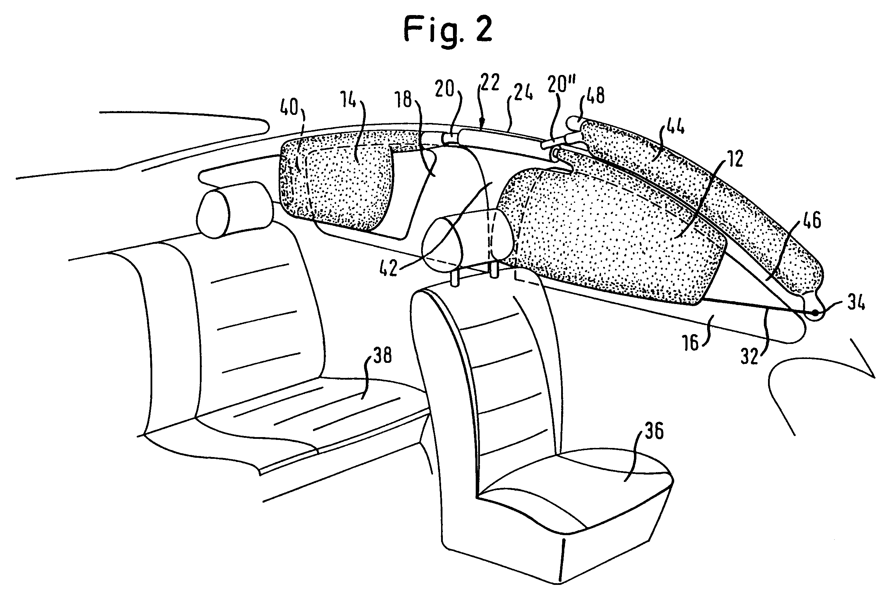

Eine weitere, in Figur 2 dargestellte Ausführungsform der Erfindung sieht zusätzlich zu den beiden Elementen 12, 14 ein weiteres aufblasbares Element 44 vor, in diesem Fall einen schlauchförmigen Gassack, der den vorderen Bereich des Dachrahmens 24, genauer der A-Säule 46, abdeckt und der im weiteren als A-Säulengassack 44 bezeichnet wird. Bauteile, die schon im Zusammenhang mit der ersten Ausführungsform beschrieben wurden, werden nicht erneut erklärt und behalten ihre Bezugszeichen.

In dieser Ausführungsform bilden die beiden aufblasbaren Elemente 12, 14 zwei getrennte Gassäcke, wobei der aus dem Element 12 gebildete Gassack einen großen Teil der vorderen Seitenscheibe 16 abdeckt und der aus dem Element 14 gebildete Gassack einen Teil der hinteren Seitenscheibe 18. Es ist kein Gewebestück vorgesehen, welches die aufblasbaren Kammern 12, 14 miteinander verbindet.

Selbstverständlich ist es auch möglich, einen Seitengassack nach der ersten Ausführungsform mit dem in Figur 2 gezeigten A-Säulengassack 44 zu kombinieren.

Der A-Säulengassack 44 ist über einen Anschluß 30, der eine Ausströmöffnung 20" mit einem auf das Volumen und den gewünschten Innendruck des A-Säulengassacks abgestimmten Querschnitt aufweist, mit dem Druckausgleichsraum 29 der Gaszuführeinrichtung 22 verbunden.

Der zusätzliche Anschluß mit der Ausströmöffnung 20" ist in Figur 1b bereits mit strichpunktierten Linien dargestellt. Figur 1b ist auch zu entnehmen, daß die Ausströmöffnungen 20, 20', 20" jeweils unterschiedliche Querschnitte besitzen, die auf das Gassackvolumen und den angestrebten Innendruck angepaßt sind.

An seinem der Gaszuführeinrichtung 22 zugewandten Ende 48 ist der A-Säulengassack 44 am Dachrahmen 24 befestigt und an seinem anderen Ende am Befestigungspunkt 34 des Befestigungsbands 32 des Elements 12.

Die Befüllung des A-Säulengassacks 44 erfolgt wie bei der ersten Ausführungsform beschrieben. Der A-Säulengassack 44 schützt den Kopf des Insassen auf dem Frontsitz 36 vor Verletzungen. Er kann einen geringeren Innendruck auf als die die Seitengassäcke bildenden Elemente 12, 14 aufweisen. Durch die übereinanderliegende Anordnung des A-Säulengassackes 44 und des aus dem Element 12 gebildeten Seitengassackes, der die vordere Seitenscheibe 16 abdeckt, entsteht ein sehr guter Schutz für den Fahrzeuginsassen.

Die Gaszuführeinrichtung 22 läßt sich leicht an den Einsatz eines oder mehrerer zusätzlicher aufblasbarer Elemente anpassen, wie etwa des zusätzlichen A-Säulengassacks 44 in Figur 2. Zu diesem Zweck werden nur zusätzliche Anschlüsse mit entsprechenden Ausströmöffnungen vorgesehen, über die die zusätzlichen aufblasbaren Elemente mit der Gaszuführeinrichtung verbunden werden. Die Ausströmöffnungen haben jeweils einen auf das Volumen und den angestrebten Innendruck des zusätzlichen aufblasbaren Elements angepaßten Querschnitt.

Verbunden mit einer Erhöhung der Zahl der Ausströmöffnungen wäre auch eine weitere Unterteilung der einzelnen aufblasbaren Elemente mit paralleler Befüllung denkbar. Ebenfalls wäre es denkbar, die einzelnen aufblasbaren Elemente in seriell miteinander verbundene Kammern zu unterteilen.

## Patentansprüche

1. Fahrzeuginsassen-Rückhaltesystem mit einer Gaszuführeinrichtung (22), die ein Außengehäuse (28) mit wenigstens zwei Ausströmöffnungen (20, 20') hat, und wenigstens zwei aufblasbaren Elementen (12, 14, 44), denen unterschiedliche Ausströmöffnungen (20, 20') zugeordnet sind und die über die zugeordneten Ausströmöffnungen (20, 20', 20") parallel befüllt werden, dadurch gekennzeichnet, daß die Ausströmöffnungen (20, 20', 20") so gestaltet sind, daß während des Aufblasens der Elemente die Gasdurchflüsse durch die einzelnen Ausströmöffnungen (20, 20') zu den aufblasbaren Elementen (12, 14, 44) unterschiedlich sind.

2. Fahrzeuginsassen-Rückhaltesystem nach Anspruch 1, dadurch gekennzeichnet, daß die Ausströmöffnungen (20, 20', 20") und die Füllvolumina der aufblasbaren Elemente (12, 14, 44) so aufeinander abgestimmt sind, daß die Gaszuführeinrichtung (22) unterschiedliche Innendrücke in den einzelnen aufblasbaren Elementen (12, 14, 44) erzeugen kann.

3. Fahrzeuginsassen-Rückhaltesystem nach Anspruch 1, dadurch gekennzeichnet, daß die Ausströmöffnungen (20, 20', 20") unterschiedliche Querschnitte aufweisen.

4. Fahrzeuginsassen-Rückhaltesystem nach einem der vorhergehenden Ansprüche, dadurch gekennzeichnet, daß die Ausströmöffnungen (20, 20', 20") so angeordnet sind, daß unmittelbar stromaufwärts von allen Ausströmöffnungen (20, 20') der gleiche Druck herrscht.

5. Fahrzeuginsassen-Rückhaltesystem nach Anspruch 4, dadurch gekennzeichnet, daß die Gaszuführeinrichtung (22) einen Gasgenerator (26) umfaßt, der in dem Außengehäuse (28) untergebracht ist, und daß zwischen Gasgenerator (26) und Außengehäuse (28) ein Druckausgleichsraum (29) gebildet ist.

6. Fahrzeuginsassen-Rückhaltesystem nach einem der vorhergehenden Ansprüche, dadurch gekennzeichnet, daß wenigstens zwei der aufblasbaren Elemente (12, 14) über ein nicht aufblasbares Verbindungsteil (32) miteinander gekoppelt sind.

7. Fahrzeuginsassen-Rückhaltesystem nach einem der vorhergehenden Ansprüche, dadurch gekennzeichnet, daß die aufblasbaren Elemente (12, 14, 44) durch Gassäcke oder Kammern in Gassäcken gebildet sind.

8. Fahrzeuginsassen-Rückhaltesystem nach Anspruch 7, dadurch gekennzeichnet, daß die Gassäcke, die die aufblasbaren Kammern (12, 14, 44) bilden, voneinander getrennt sind.

9. Fahrzeuginsassen-Rückhaltesystem nach einem der vorhergehenden Ansprüche, dadurch gekennzeichnet, daß die aufblasbaren Elemente (12, 14) und die Gaszuführeinrichtung (22) ein Gassackmodul bilden und daß das Gassackmodul ein längs des Dachrahmens (24) eines Fahrzeugs angeordnetes Seitengassackmodul ist, mit wenigstens einem aufblasbaren Element (12, 14), das wenigstens eine Seitenscheibe (16, 18) eines Fahrzeugs teilweise abdeckt.

10. Fahrzeuginsassen-Rückhaltesystem nach den Ansprüchen 5 und 9, dadurch gekennzeichnet, daß die Gaszuführeinrichtung (22) zwei axiale Enden aufweist, daß die Ausströmöffnungen (20, 20', 20") an den axialen Enden angeordnet sind und daß der Gasgenerator (26) hinter einem Fahrzeugfrontsitz (36) und vorderhalb des Sitzes (38) eines Heckinsassen am Dachrahmen (24) angeordnet ist und sich je ein aufblasbares Element (12, 14) von den axialen Enden der Gaszuführeinrichtung (22) nach vorne und nach hinten erstreckt.

11. Fahrzeuginsassen-Rückhaltesystem nach Anspruch 9 oder 10, dadurch gekennzeichnet, daß ein sich längs eines vorderen Dachrahmens (46) erstreckender, diesen Teil des Dachrahmens abdeckender Gassack (44) als aufblasbares Element vorgesehen ist, der mit der Gaszuführeinrichtung (22) in Strömungsverbindung steht.

12. Fahrzeuginsassen-Rückhaltesystem nach Anspruch 11, dadurch gekennzeichnet, daß der sich längs des vorderen Dachrahmens (46) erstreckende Gassack (44) als langgestreckter Schlauch ausgebildet ist, unter dem im aufgeblasenen Zustand ein die vordere Seitenscheibe (16) wenigstens teilweise abdeckender Gassack (12) angeordnet ist.
